# EUROPÄISCHE PATENTSCHRIFT

(11) **EP 1 099 948 B1**
(45) Veröffentlichungstag und Bekanntmachung des Hinweises auf die Patenterteilung: **24.09.2003**
(21) Anmeldenummer: 00123021.8
(22) Anmeldetag: 24.10.2000
(51) Int. Cl.: G01N 21/89, G01N 21/88

(54) **Vorrichtung und Verfahren zur optischen Inspektion**
System and method for optical inspection
Appareil et procédé pour l'inspection optique

(30) Priorität: 09.11.1999 DE 19953741
(43) Veröffentlichungstag der Anmeldung: 16.05.2001
(73) Patentinhaber: KRONES AG, 93068 Neutraubling (DE)
(72) Erfinder: Piana, Stefan, 93096 Köfering (DE); Werzinger, Lothar, 93059 Regensburg (DE)

(56) Entgegenhaltungen:
- EP-A- 0 488 441
- EP-A- 0 543 629
- DE-A- 3 424 360
- DE-C- 19 736 567
- PATENT ABSTRACTS OF JAPAN vol. 1997, no. 04, 30. April 1997 (1997-04-30) & JP 08 334475 A (MATSUSHITA ELECTRIC IND CO LTD), 17. Dezember 1996 (1996-12-17)
- PATENT ABSTRACTS OF JAPAN Bd. 017, Nr. 438 (P-1591) 12 August 1993 & JP 05 093 699 A (HITACHI ENG CO LTD) 16 April 1993

## Beschreibung

Die Erfindung betrifft eine Vorrichtung mit den Merkmalen des Oberbegriffs des Anspruchs 1 und ein Verfahren mit den Merkmalen des Oberbegriffs des Anspruchs 6.

Solche bekannten Vorrichtungen und Verfahren, wie sie z.B. in der Druckschrift DE 196 24 552 der Anmelderin beschrieben sind, werden unter anderem in der Getränkeindustrie verwendet. Auf einem Fließband positionierte Glasflaschen durchlaufen dabei nacheinander einzelne Inspektionsmodule zur Erfassung bestimmter Produktionsfehler der Glasflaschen, so dass beschädigte Flaschen aus den Abfülllinien ausgesondert werden können.

Im speziellen umfassen die einzelnen Inspektionsmodule hierbei jeweils eine Kamera, die ein Einzelbild einer gerade vorbeitransportierten Glasflasche aufnimmt, wobei die Abbildungsoptik der Kamera so gewählt und angeordnet ist, dass z.B. eine Seitenwand- oder eine Bodeninspektion durchgeführt werden kann.

Ein an eine solche Kamera angeschlossenes Bildauswertungssystem, das ein auf einem Rechner laufendes Bildverarbeitungsprogramm umfasst, wertet die aufgenommenen Einzelbilder aus und gibt gegebenenfalls ein Signal ab, um eine als fehlerhaft erkannte Flasche vom Laufband auswerfen zu lassen.

Sofern die bekannten Inspektionsvorrichtungen nicht nur ein Inspektionsmodul, sondern mehrere Inspektionsmodule umfassen, wird meist für jedes einzelne dieser Module ein separater Auswertungsrechner zur Verfügung stehen, auf dem das jeweilige Bildverarbeitungsprogramm ausgeführt wird.

Wenn allerdings bei einem solchen bekannten System ausgewählte Bilder,-z.B. solche Fehlerbilder, in denen Defekte der Flaschen erkannt worden sind, genauer analysiert oder Parameter des Bildauswertungsprogramms eingestellt bzw. geändert werden sollen, so werden die Bildverarbeitungsprogramme, die während der laufenden Produktion permanent für die Inspektion der kontinuierlich durch die Inspektionsmodule vorbeilaufenden Glasflaschen benötigten werden, durch die für die Analysezwecke notwendigen Bildauswertungsschritte, Anzeigefunktionen, z.B. Einblendungen grafischer Ergebnisse und dergl., zusätzlich belastet, so dass die eigentlichen in Echtzeit auszuführenden Inspektionsaufgaben während der laufenden Produktion nicht oder nicht mit voller Geschwindigkeit ausgeführt werden können.

Das heißt, weil die zur Bildauswertung in den einzelnen Inspektionsmodulen verwendeten Programme gleichzeitig zur Analyse von Fehlerbildern verwendet werden, stehen sie nicht mehr für den laufenden Betrieb zur Verfügung, so dass entweder zeitweise die vorbeibewegten Flaschen nicht durch die entsprechende Inspektionsvorrichtung kontrolliert werden, oder alternativ das Laufband gestoppt werden muss, bis das Bildverarbeitungsprogramm wieder vollständig für eine Echtzeitauswertung vorbeitransportierten Flaschen zur Verfügung steht.

Unter Echtzeitauswertung im Sinne der vorliegenden Anmeldung wird verstanden, dass beispielsweise im laufenden Betrieb einer Abfüllanlage das aufgenommene Bild der zu inspizierenden Flasche anschließend so rasch ausgewertet wird, dass eine Auswertung der Aufnahmen für jede der sequentiell inspizierten Flaschen während des Betriebes möqlich ist.

Aus EP 0 543 629 A1 ist ein kameragestütztes Inspektionssystem zum Erkennen von Fehlern in einem bandförmigen Objekt bekannt. Dabei wird das bandförmige Objekt gleichzeitig von mehreren nebeneinander angeordneten Kameras aufgenommen. Jede der Kameras besitzt ein Bildauswertungssystem zum Ermitteln evtl. auftretender Fehler. Ausschließlich die Fehlerdaten der Kameras werden an eine Bildverarbeitungseinheit weitergeleitet, die die Fehlerdaten der verschiedenen Kameras zu einem gemeinsamen Fehlerbild zusammensetzt und an einen zentralen Computer zur Bestimmung des Fehlertyps weiterleitet. Dadurch, dass ausschließlich nur die Fehlerdaten der Kameras weitergeleitet werden, soll eine erhebliche Reduzierung des Datenvolumens in der Bildverarbeitungseinheit erreicht werden.

Die Aufgabe der vorliegenden Erfindung ist es deshalb, eine Vorrichtung und ein Verfahren anzugeben, mitdenen eine Analyse von Fehlern im wesentlichen ohne Beeinträchtigung des laufenden Echtzeit-Inspektionsbetriebs der Vorrichtung mögliche ist.

Diese Aufgabe wird gelöst durch: die Vorrichtung mit den Merkmalen des Anspruchs 1 und das Verfahren mit den Merkmalen, des Anspruchs 6. Bevorzugte Ausführungsformen sind Gegenstand von Unteransprüchen.

Dadurch, dass zumindest ein Teil der von dem Bildauswertungssystem auszuwertenden Bilddaten der Kamerasysteme und/oder der bereits vom Auswertungssystem verarbeiteten Daten an ein Analysesystem übermittelt werden können, ist es möglich, während des laufenden Betriebes ausgewählte Bilder unabhängig von der Echtzeitauswertung analysieren zu können. Hierzu benutzt das Analysesystem ein Bildauswertungsprogramm, das im wesentlichen dem des Bildauswertungssystems entspricht.

Weil es die erfindungsgemäße Lösung ermöglicht, fehlerhafte Bilder nicht mit den Bildverarbeitungsprogramm zu analysieren, das das Auswertungssystem im laufenden Betrieb zur Echtzeitinspektion der aufgenommenen Bilder benötigt, sondern mit dem entsprechenden Programm des Analysesystems, kann im Gegensatz zu den bekannten Inspektionsvorrichtungen das Auswertungsprogramm des Bildauswertungssystems ständig für die Echtzeitauswertung der nacheinander aufgenommenen Bilder des Bildauswertungssystems zur Verfügung stehen und somit wird eine Verminderung der Produktionsgeschwindigkeit oder gar eine Unterbrechung der laufenden Produktion vermieden.

Da das Analysesystem mit einem im wesentlichen funktionsgleichen Bildauswertungsprogramm wie das Bildauswertungssystem arbeitet, können ausgewählte der von den Kameras aufgenommenen Bilder in der gleichen Art und Weise wie in dem zugehörigen Bildauswertungssystem ausgewertet und mit Rechenzeit intensiven Grafikdarstellungen angezeigt und analysiert werden. So können beispielsweise auch alle Parameter, die die genaue Funktion der Bildauswertungs -bzw. Bildverarbeitungsalgorithmen festlegen, in dem Analysesystem verändert und die Auswirkungen der Änderungen auf die verarbeiteten, d.h. ausgewerteten Bilddaten überprüft werden.

Weil somit die Analyse und die Parametrierung in einem separaten Analysesystem durchführbar ist, muss sich der Fachmann für die Ausführung dieser Funktionen auch nicht mehr unmittelbar am Ort der Inspektionsanlage befinden, sondern kann sich z.B. per Fernübertragung die notwendigen Daten an einem anderen Ort zukommen lassen.

Vorteilhafterweise ist zur Ausführung der Bildauswertungsprogramme das Analysesystem mit einem ersten Computerprozessor und das Bildauswertungssystem mit einem zweiten Computerprozessor versehen.

Beispielsweise kann für das Analysesystem und das Bildauswertungssystem jeweils ein eigener Rechner zur Verfügung stehen. Somit wird auf besonders einfache und kostengünstige Weise ermöglicht, dass die beiden Systeme unabhängig voneinander funktionieren können, da zur Fehleranalyse nicht der Prozessor zur Bildauswertung im Bildauswertungssystem verwendet werden muss, der ständig für die Echtzeitauswertung während des laufenden Inspektionsbetriebs benötig wird.

Bevorzugterweise wird das Kamerasystem mehrere Kameras zur Bildaufnahme umfassen und jeweils ein Bildauswertungsrechner mit einer der Kameras verbunden sein.

Das heißt, die erfindungsgemäße Inspektionsvorrichtung kann nicht nur für ein Inspektionsmodul, sondern auch für mehrere Inspektionsmodule, die jeweils eigene Kameras haben, verwendet werden. So ist beispielsweise möglich, dass jeweils eine Kamera mit zugehörigem Auswerterechner mit Bildverarbeitungssoftware als ein Inspektionsmodul zur Seitenwandkontrolle von Glasflaschen dient, während ein weiteres in der Abfülllinie angeordnetes Inspektionsmodul davon getrennt ebenfalls eine Kamera und einen Auswerterechner mit Bildverarbeitungsoftware umfasst, die zur Bodenkontrolle oder ähnlichem dienen.

In einer bevorzugten Ausführungsform ist das Analysesystem so ausgestaltet, dass dem Analysesystem wahlweise die Bilddaten eines der aufgenommenen Bilder übermittelt werden können.

Somit kann eine die Inspektionsvorrichtung bedienende Person sich die Daten eines der Bilder, bei denen das Bildauswertungssystem nach der laufenden Echtzeitauswertung einen Defekt bei der Herstellung der untersuchten Flasche festgestellt hat, auf den Rechner des Analysesystems übertragen lassen, um das zugehörige Fehlerbild weiter zu analysieren, ohne dass der laufende Betrieb des zugehörigen Inspektionsmoduls, das dieses Bild aufgenommen hat, unterbrochen werden muss.

Besonders vorteilhaft werden durch ein Vermittlungssystem Einstellungsdaten zur Einstellung des Bildauswertungssystems so an das Bildauswertungssystem übermittelt.

Hat die Bedienperson bei der Analyse von Bilddaten mit Hilfe des Analysesystems beispielsweise festgestellt, dass besser andere als die derzeitigen Parameter zur Steuerung des Bildauswertungsprogramms verwendet werden sollten, um fehlerhafte Gegenstände noch zuverlässiger durch die optische Inspektion zu erfassen, so können diese veränderten Parameter beispielsweise durch die Bedieneinheit des Analysesystems mittels des Vermittlungssystems zu den einzelnen Bildauswertungssystemen übertragen werden.

Weil die Eingabe bzw. Auswahl der Parameter in dem Analysesystem und nicht in den Bildauswertungssystemen direkt erfolgt, führen auch diese während des Betriebes einer Inspektionsanlage eventuell notwendigen Vorgänge nicht zu einer Beeinträchtigung der laufenden Produktion. Nach dem Ende der Übertragung der Parameter an einzelne oder alle Bildauswertungsprogramme der einzelnen Inspektionsmodule schalten diese jeweils auf den neuen Parametersatz um.

Mit dem erfindungsgemäßen Verfahren lassen sich dieselben Vorteile erzielen, die bereits vorgehend in Bezug auf die erfindungsgemäße Vorrichtung beschrieben wurden.

Die Erfindung wird im folgenden anhand des in der Zeichnung dargestellten Ausführungsbeispiels weiter erläutert und beschrieben.

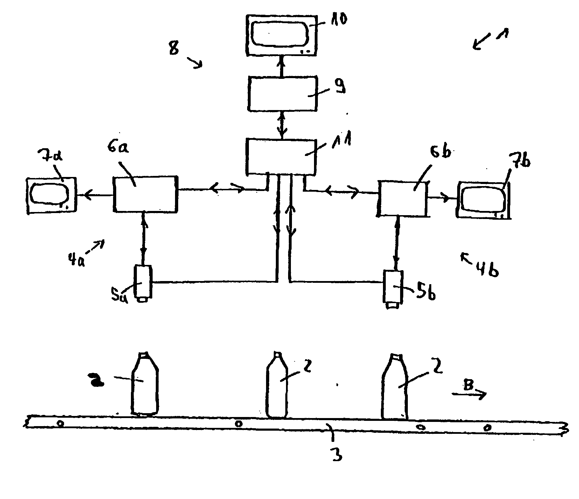

Dabei zeigt die einzige Figur 1 eine schematische Ansicht auf eine erfindungsgemäße Inspektionsvorrichtung. Die schematische Ansicht soll insbesondere dazu dienen, die Verknüpfung der einzelnen Komponenten der erfindungsgemäßen Vorrichtung zu veranschaulichen.

Die erfindungsgemäße Inspektionsvorrichtung 1 ist in einer Produktionsstraße zur Herstellung und/oder Abfüllung von Flaschen installiert. Die Flaschen 2 werden dabei auf einem Laufband 3 positioniert und in Richtung B auf dem Laufband 3 transportiert. Der besseren Anschaulichkeit halber sind nur drei der auf dem Laufband befindlichen Flaschen in der Figur 1 dargestellt.

Im Verlauf der Transportlaufbahn 3 sind zwei Inspektionsmodule 4a, 4b angebracht, die räumlich so voneinander beabstandet angeordnet sind, dass die auf dem Laufband 3 beförderten Flaschen 2 jeweils einzeln zuerst das erste Inspektionsmodul 4a und daran anschließend das zweite Inspektionsmodul 4b durchlaufen. Jedes der Inspektionsmodule 4a, 4b umfasst dabei eine nicht dargestellte Lichtquelle zur Beleuchtung einer Flasche 2 wobei über geeignete Optiken das Licht der beleuchteten Flasche 2 auf eine Kamera 5a,5b abgebildet wird, die ein Bild der zu überprüfenden Flasche 2 aufnimmt.

Die als Einzelbild aufgenommenen Bilddaten der jeweiligen sich in dem Bereich der Inspektionsmodule 4a, 4b befindlichen Flaschen 2 werden an einen zugehörigen Rechner 6a bzw. 6b zur Bildauswertung übertragen.

Der Bildauswertungsrechner 6a umfasst dabei u.a. eine Tastatur zum Bedienen des Rechners und eine Bildverarbeitungssoftware, die als Bildauswertungsprogramm zur Auswertung der mit der Kamera 5a aufgenommenen Einzelbilder der sich in dem Inspektionsmodul 4a gerade inspizierten Flasche 2 auswertet. Der Rechner 6b des zweiten Moduls 4b ist entsprechend aufgebaut.

Die Bildauswertungsrechner 6a, 6b der jeweiligen Inspektionsmodule 4a, 4b sind weiterhin jeweils mit einem Monitor 7a, 7b verbunden, der insbesondere auch zur Anzeige von Auswertungsergebnissen dient.

Somit umfasst sowohl das erste Inspektionsmodul 4a als auch das zweite Inspektionsmodul 4b jeweils eine Aufnahmekamera 5a, 5b, einen mit der Kamera 5a, 5b verbundenen Bildauswertungsrechner 6a, 6b und einen mit dem Rechner 6a, 6b verbundenen Monitor 7a, 7b.

Als Beispiel ist in der beschriebenen Ausführungsform der Figur 1 das erste Inspektionsmodul 4a ein Modul zur Seitenwandkontrolle und das Modul 4b ein Bodeninspektionsmodul mit integrierter Leseeinrichtung für die Erkennung und Zuordnung der Formnummer.

Die einzelnen Inspektionsmodule 4a, 4b dienen somit u.a. zum Erkennen von Fehlern und Defekten der auf dem Laufband 3 transportierten Flaschen 2, so dass als fehlerhaft durch die Bildauswertung erkannte Flaschen nach dem Durchlauf durch die Inspektionsmodule aussortiert und beispielsweise automatisch durch eine nichtdargestellte Auswurfeinrichtung ausgeworfen werden können.

Die Bildauswertungsrechner 6a,6b sind dabei für die in der Bildverarbeitung notwendige Verarbeitung hoher Bildraten in Echtzeit ausgelegt. So muss z.B. das Auswertungsprogramm auf dem Auswertungsrechner 6a dazu in der Lage sein, die von der Kamera 5a übermittelten Bilder der sich jeweils im Abbildungsbereich gerade befindlichen Flasche 2 so schnell zu verarbeiten, dass ohne größeren zeitlichen Verzug auch die nachfolgend aufgenommenen Einzelbilder der später das Inspektionsmodul 4a durchlaufenden Flaschen 2 ausgewertet werden können.

Im beschriebenen Ausführungsbeispiel muss beispielsweise diese Echtzeitauswertung so schnell erfolgen, dass im Falle eines Bildauswertungsergebnisses, das eine defekte Flasche 2 anzeigt, das Auswurfsignal von dem Bildauswertungsrechner 6a an die Auswurfeinheit am Laufband 3 so schnell übermittelt werden kann, dass noch ein Auswerfen dieser Flasche möglich ist bevor diese bereits an der Auswurfeinheit vorbeigelaufen ist.

Da der Aufbau und die Funktion der einzelnen Inspektionsmodule 4a, 4b dem Fachmann an sich bekannt ist, wird auf eine genauere Beschreibung verzichtet. Es sei allerdings angemerkt, dass die Anzahl der einzelnen Inspektionsmodule nicht auf die dargestellte Anzahl von zweien beschränkt ist und dass die Module durchaus auch für andere als die beschriebenen Kontrollfunktionen ausgelegt sein könnten.

Während die bisher beschriebenen Komponenten der erfindungsgemäßen Vorrichtung 1 somit an sich bekannt sind, ist die erfindungsgemäße Lösung unter anderem dadurch ausgezeichnet, dass zusätzlich ein Analysesystem 8 vorgesehen ist, mit dem unabhängig vom laufenden Betrieb der Echtzeitüberprüfung der kontinuierlich durchlaufenden Flaschen 2 eine Überprüfung und Analyse von ausgewählten der mit den Kameras 5a, 5b aufgenommenen Bilder möglich ist.

Dazu umfasst das Analysesystem 8 einen Rechner 9, der mit einem Bildauswertungsprogramm versehen ist, das in der Funktion dem entspricht, das auch auf den Auswertungsrechnern 6a, 6b der einzelnen Inspektionsmodule 4a, 4b zur Durchführung der Auswertungsfunktionen vorhanden ist.

Für den Fall, dass auf den einzelnen Inspektionsmodulen 4a, 4b unterschiedliche Auswertungsprogramme laufen, sind vorteilhafterweise alle diese unterschiedlichen Bildauswertungsprogramme auch auf dem Analyserechner 9 vorhanden. Der Analyserechner 9 umfasst hierbei eine nicht dargestellte Eingabetastatur und ist mit einem zugeordneten Monitor 10 zur Darstellung von Grafiken und Texten verbunden.

Der Analyserechner 9 ist über eine Vermittlungseinheit 11 unter anderem mit jeweils einem Ausgang der Kameras 5a, 5b der Inspektionsmodule 4a, 4b verbunden, wodurch es ermöglicht ist, dass die Bilddaten bestimmter von den Kameras 5a, 5b aufgenommener Flaschenbilder nicht nur an die zugeordneten Bildauswertungsrechner 6a, 6b übermittelt werden, sondern auch mit den identischen Bildverarbeitungsalgorithmen des Bildauswertungsprogramms auf dem Analyserechner 9 unabhängig vom laufenden Betrieb der Inspektionsmodule 4a, 4b dargestellt, verändert und analysiert werden können.

Die Vermittlungseinheit 11 ist vorteilhafterweise nicht nur mit dem Analyserechner 9 und den einzelnen Kameras 5a, 5b, sondern auch so mit den einzelnen Bildauswertungsrechnern 6a, 6b verbunden, dass die Vermittlungseinheit für einen Datenaustausch zwischen diesen einzelnen Komponenten verwendet werden kann.

Die Vermittlungseinheit 11 dient zur Koordination, insbesondere auch zur zeitlichen Koordination der Übertragung der Daten zwischen den einzelnen angeschlossenen Komponenten. Zudem wird sie auch dazu verwendet, Einstellungsparameter des Bildauswertungsprogramms, das sowohl auf den Auswertungsrechnern 6a, 6b als auch auf dem Analyserechner 9 läuft, an die Bildauswertungsrechner 6a, 6b zu übermitteln bzw. die in diesen Rechnern momentan vorhandenen Einstellungsdaten und/oder auch bereits ausgewertete Bilddaten einzelner verarbeiteter Inspektionsbilder an den Analyserechner 9 zu übermitteln.

Vorteilhafterweise ist die Vermittlungseinheit 11 dabei so ausgestaltet, dass sie auf einen unmittelbar oder über Fernverbindung eingebbaren Befehl einige der von der Kamera 5a bzw. dem Rechner 6a gelesenen Daten zwischenspeichert, um zu ermöglichen, dass diese Daten von einem bestimmten aufgenommenen Einzelbild auch noch dann von dem Analyserechner 9 gelesen werden können, wenn das Inspektionsmodul 4a bereits ein neues Bild einer weiteren Flasche aufnimmt und verarbeitet. Alternativ könnte diese Funktion auch von den Auswertungsrechnern 6a, 6b, den Kameras 5a, 5b bzw. dem Analyserechner 9 ausgeführt werden.

Die Vermittlungseinheit 11 kann hierbei eine von dem Analyserechner 9 separate Rechnereinheit sein.

Das erfindungsgemäße Verfahren wird nun wie folgt durchgeführt:

Die Flaschen 2 werden auf dem Laufband 3 in Transportrichtung B zuerst zu dem ersten Inspektionsmodul 4a zur Seitenwandkontrolle und anschließend zu dem zweiten Bodeninspektionsmodul 4b transportiert. Die Flaschen werden dabei einzeln in den Abbildungsbereich der Aufnahmekameras 5a, 5b der Inspektionsmodule 4a bzw. 4b geführt und ein jeweils ein Einzelbild der momentan dort befindlichen Flasche 2 gemacht.

Dann wird beispielsweise in dem ersten Inspektionsmodul 4a von der Kamera 5a digitale Bilddaten des aufgenommenen Bildes erzeugt und dem Bildauswertungsrechner 6a über eine geeignete Schnittstelle zugeführt. Die von der Kamera 5a übermittelten Bilddaten werden dabei automatisch dem laufenden Bildauswertungsprogramm auf dem Auswertungsrechner 6a übergeben und dort nach vorgegebenen

Bildverarbeitungsalgorithmen verarbeitet und ausgewertet. Das zweite Modul 6b funktioniert entsprechend.

Bevorzugterweise läuft diese Auswertung vollständig automatisiert ab, so dass in dem Fall, in dem das Bildauswertungsprogramm feststellt, dass gewisse Eigenschaften des aufgenommenen Bildes der Flasche 2 außerhalb von vorbestimmten Toleranzgrenzen liegen, automatisch von dem Auswertungsrechner 6a ein Signal an die in der Zeichnung nicht dargestellte Auswurfeinheit übergeben wird, die als beschädigt ausgewertete Flasche 2 anschließend vom Laufband 3 auswirft.

Die Auswertung in dem Inspektionsmodul 4a erfolgt dabei in Echtzeit, d.h. so schnell, dass ein Einzelbild von jeder einzelnen der den Abbildungsbereich der Kamera 5a durchlaufenden Flaschen 2 gemacht und ausgewertet werden kann.

Der mit dem Auswertungsrechner 6a verbundene Monitor 7a ist dabei für die Durchführung der Auswertung nicht zwingend notwendig, sondern dient beispielsweise nur zur Anzeige der aktuell ausgewerteten Bilder, so dass der momentane Auswertungszustand einer Bedienperson optisch angezeigt werden kann.

Während des laufenden Betriebes der beschriebenen Echtzeitinspektion der kontinuierlich auf dem Laufband 3 beförderten Flaschen 2 kann nun eine Bedienperson die jeweils auf den Monitoren 7a, 7b dargestellten Ergebnisse der Auswertung beobachten bzw. sich anzeigen lassen. Wenn nun beispielsweise der Bedienperson die momentane Art der Auswertung bzw. Darstellung der Bilder zur Fehlerinspektion als unzureichend erscheint oder er ein Bild einer von dem Auswertungsrechner 6a,6b als fehlerhaft erkannten Flasche 2 weitergehend auswerten möchte, so kann sie sich über die Vermittlungseinheit 11 die zugehörigen Daten auf den Analyserechner 9 übertragen lassen.

Wenn nun die Bedienperson eines der aufgenommenen Bilder näher untersuchen möchte, werden entweder mittels der Vermittlungseinheit 11 direkt die Bilddaten der Kamera 5a, die z.B. über einen gewissen Zeitraum in der Vermittlungseinheit 11 zwischengespeichert werden könnten, an das Bildauswertungsprogramm des Analyserechners 9 übergeben. Zusätzlich oder alternativ können auch die bereits in das Bildauswertungsprogramm auf dem Auswertungsrechner 6a eingegebenen Bilddaten des ausgewählten Bildes, die beispielsweise auch bereits von dem Programm weiterverarbeitet und ausgewertet wurden, über die Vermittlungseinheit 11 dem Bildauswertungsprogramm des Analyserechners 9 übertragen werden.

Dabei kann die Bedienperson entweder selber das Bild auswählen, dessen Daten übertragen werden sollen, oder diese Auswahl auch automatisch nach gewissen vorgegebenen Kriterien durchführen lassen.

Mit den Bilddaten des Bildverarbeitungsprogramms werden vorteilhafterweise auch die momentanen Einstellungsparameter des Bildauswertungsprogramms des Auswertungsrechners 6a an den Analyserechner 9 übertragen.

Weil somit erfindungsgemäß ein eigener separater Prozessor 9 für Analysezwecke vorgesehen ist, der mit einem identischen Bildauswertungsprogramm wie die eigentlichen Inspektionsmodule 4a, 4b arbeitet, ist es also möglich, dass unabhängig vom laufenden Betrieb der Echtzeitauswertung der Module 4a, 4b sich eine Bedienperson einzelne Bilder auswählen kann, die sie weiter analysieren möchte.

Wenn nun die Daten für ein ausgewähltes Bild an den Analyserechner 9 übertragen wurden, können diese nach beliebigen Kriterien von der Bedienperson weiter untersucht werden, beispielsweise indem die Parameter des Bildauswertungsprogramms geändert und die Auswirkungen auf die erzielten bzw. dargestellten Ergebnisse kontrolliert werden.

Für den Fall, dass die Bedienperson beispielsweise aufgrund seiner Analyse der Meinung ist, dass geänderte Parametersätze für die Bildauswertung geeigneter als die momentan auf dem Biidauswertungsrechner 6a, 6b verwendeten sein sollten, kann sie diese Daten über die Vermittlungseinheit 11 an das Bildauswertungsprogramm des Bildauswertungsrechners 6a übermitteln, so dass die Eingabe oder Auswahl dieser Parametersätze nicht zu einer Verzögerung des Ablaufs der Echtzeitauswertung der Bildauswertungssysteme 4a, 4b führt. Die Übermittlung kann in der Phase zwischen zwei Bildaufnahmen erfolgen.

Nachdem nun über die Vermittlungseinheit 11 ein geänderter Parametersatz an eine oder beide der Auswertungsrechner 6a, 6b übermittelt wurden, schaltet das zugehörige Bildauswertungsprogramm auf den neuen Parametersatz um. Es sei angemerkt, dass das erfindungsgemäße System auch dazu in der Lage sein könnte, nicht nur Einstellungsdaten des Bildauswertungsprogramms auf den Bildauswertungsrechnern 6a selber, sondern auch Einstellungs- bzw. Justagedaten der Aufnahmeoptik, z.B. der Kamera 5a, zu erfassen und zu ändern.

Wie erwähnt, ist ein besonderer Vorteil der erfindungsgemäßen Lösung, dass die ausgewählten Bilder mittels derselben Bildverarbeitungsalgorithmen, die auch auf den Rechnern der Bildauswertungsmodule 4a, 4b laufen, ausgewertet, mit rechenzeitintensiven Grafikdarstellungen angezeigt und analysiert werden können. Weiterhin können alle Parameter, die die genaue Funktion der Algorithmen festlegen, auf den Analyserechner 9 verändert und die Auswirkungen der Änderungen anhand der auf dem zugeordneten Monitor 10 angezeigten Ergebnisse überprüft werden, während gleichzeitig der normale Inspektionsbetrieb nicht beeinträchtigt wird.

Bei den bekannten Vorrichtungen war dies, wie vorstehend erwähnt, nicht in diesem Maße möglich, da die Analyse von Bildern wie das Ausprobieren von Auswirkungen von veränderten Parametersätzen auf die Auswertung mit den für den laufenden Betrieb bestimmten Programmen ausgeführt werden musste, was dazu geführt hatte, dass während der Analyse diese Module entweder vollständig für eine laufende Inspektion der gerade vorbeitransportierten Flaschen ausfielen und die Produktion deswegen eventuell ganz gestoppt werden musste.

Im Gegensatz dazu ist aufgrund der erfindungsgemäßen Bereitstellung eines zusätzlichen Analysesystems ermöglicht, eine eingehende Analyse ausgewählter Bilder durchzuführen, während gleichzeitig parallel die normalen Inspektionsaufgaben der Inspektionsmodule 4a, 4b bei voller Produktionsgeschwindigkeit weiterlaufen können.

Die Trennung der Analysefunktion in dem Analysesystem von der eigentlichen Inspektionsfunktion in den Inspektionsmodulen 4a, 4b hat den weiteren Vorteil, dass die Analyse und Parametrierung auch getrennt von der Inspektionsmaschine erfolgen kann, d.h. Z.B. auch durch einen Fernzugriff über entsprechende Datenübermittlungswege (Internet oder dgl.) oder dass auch gespeicherte Kamerabilder verwendet werden können, um die momentan in dem Bildverarbeitungsrechner 6a, 6b verwendeten Parametersätze zu kontrollieren und zu variieren.

In der beschriebenen Ausführungsform werden die Bildauswertungs- und die Analysefunktion in getrennten Rechnersystemen 6a, 6b bzw. 9 ausgeführt. Sofern allerdings leistungsstarke Rechner zur Verfügung stehen, könnten die einzelnen Funktionen der Rechner 6a, 6b, 9 und der Vermittlungseinheit 11 auch von einem einzelnen Rechner, z.B. mit mehreren Prozessoren durchgeführt werden, der Multitaskingfähig ist.

## Patentansprüche

1. Vorrichtung (1) zur optischen Inspektion von Gegenständen (2) wie Flaschen oder dergl., mit einem Bildauswertungssystem, mit einem Kamerasystem (5a, 5b) zur Aufnähme von Bildern der zu überprüfenden Gegenstände (2) und zur Erzeugung und Übermittlung von zugehörigen Bilddaten an das Bildauswertungssystem (6a, 6b, 7a, 7b) mit einem Bildauswertungsprogramm zur Auswertung der übermittelten Bilddaten in Echt zeit, mit einer Transporteinrichtung (3) zum Vorbeiführen der Gegenstände an dem Kamerasystem sowie einer Aussortiereinrichtung zum Separieren von durch das Bildauswertungssystem als fehlerhaft erkannten Gegenständen nach dem Durchlauf durch das Kameräsystem, **gekennzeichnet durch** eine Vermittlungseinheit (11) und ein daran ansgeschlossenes Analysesystem (8, 9, 10) mit einem Bildauswertungsprogramm, das im wesentlichen dem des Bildauswertungssystems entspricht, dem entweder mittels der Vermittlungseinheit (11) direkt ausgewählte Bilder des kamerasystems (5a,5b) und zusätzlich oder alternativ die Bilddaten der ausgewählten Bilder, die bereits in das Bildauswertungssystem (6a,6b,7a,7b) eingegeben und ausgewertet wurden, übermittelt werden, um zu ermöglichen, dass die ausgewählten Bilder unabhängig von der Echtzeitauswertung des Bildauswertungssystems (6a, 6b, 7a,7b) analysiert werden.

2. Vorrichtung nach Anspruch 1, **dadurch gekennzeichnet, dass** zur Ausführung der Bildauswertungsprogramme das Analysesystem (8, 9, 10) mit einem ersten Computerprozessor (9) und das Bildauswertungssystem (6a, 6b, 7a, 7b) mit einem zweiten Computerprozessor (6a, 6b) versehen sind.

3. Vorrichtung nach Anspruch 1 oder 2, **dadurch gekennzeichnet, dass** das Kamerasystem (5a, 5b) mehrere Kameras (5a, 5b) zur Bildaufnahme umfasst und jeweils ein Bildauswertungsrechner (6a, 6b) des Bildauswertungssystems (6a, 6b, 7a, 7b) mit einer der Kameras (5a, 5b) verbunden ist.

4. Vorrichtung nach einem der Ansprüche 1 bis 3, **dadurch gekennzeichnet, dass** das Analysesystem (8, 9, 10) so ausgestaltet ist, dass dem Analysesystem (8, 9, 10) wahlweise die Bilddaten eines der von dem Kamerasystem (5a, 5b) aufgenommenen Bilder übermittelt werden können.

5. Vorrichtung nach einem der Ansprüche 1 bis 4, **gekennzeichnet durch** die mit dem Bildauswertungssystem (6a, 6b, 7a, 7b) verbundene Vermittlungseinheit (11), die Einstellungsdaten zur Einstellung des Bildauswertungssystems (6a, 6b, 7a, 7b) an das Bildauswertungssystem (6a, 6b, 7a, 7b) übermittelt.

6. Verfahren zur optischen Inspektion von mit einer Transporteinrichtung transportierten und an einem Kamerasystem vorbeigeführten Gegenständen wie Flaschen oder dergl., wobei Bilddaten von aufgenommenen Bildern der zu überprüfenden Gegenstände (2) in Echtzeit in einem Bildauswertungssystem (6a, 6b, 7a, 7b) ausgewertet und durch das Bildauswertungssystem als fehlerhaft erkannte Gegenstände mittels einer Aüssortiereinrichtung nach dem Durchlauf durch das Kamerasystem automatisch aussortiert werden, **dadurch gekennzeichnet, dass** die Bilddaten ausgewählter Bilder über eine Vermittlungseinheit (11) entweder direkt von Kamerasystem (5a, 5b) an ein Analysesystem (8, 9, 10) und zusätzlich oder alternativ die Bilddaten der ausgewählten Bilder, die bereits vom Bildauswertungssystem (6a, 6b, 7a,7b) ausgewertet wurden, übermittelt werden, um zu ermöglichen, dass die Bilddaten unabhängig von der Echtzeitauswertung des Bildauswertungssystems (6a, 6b, 7a, 7b) analysiert werden können.

7. Verfahren nach Anspruch 6, **dadurch gekennzeichnet, dass** Einstellungsdaten zur Einstellung des Bildauswertungssystems (6a, 6b, 7a, 7b) so an das Bildauswertungssystem (6a, 6b, 7a, 7b) übermittelt werden, dass der zeitliche Ablauf der Echtzeitauswertung des Bildauswertungssystem (6a, 6b, 7a, 7b) nicht verzögert wird.

8. Verfahren nach Anspruch 7, **dadurch gekennzeichnet, dass** dem Analysesystem (8, 9, 10) die Bilddaten eines der Bilder übermittelt wird, das bereits vorher von dem Bildauswertungsprogramm ausgewertet und als Fehlerbild erkannt wurde.

## Claims

1. Apparatus (1) for the optical inspection of objects (2), such as bottles or the like, with an image-evaluation system, having a camera system (5a, 5b) for taking photographs of the objects (2) to be examined and for producing associated image data and transmitting said image data to the image-evaluation system (6a, 6b, 7a, 7b) which has an image-evaluation programme for evaluating the transmitted image data in real time, and having conveying means (3) for carrying the objects past the camera system, as well as a sorting device for separating out objects, recognized by the image-evaluation system as being defective, after they have passed through the camera system, **characterized by** a relay unit (11) and an analysis system (8, 9, 10) connected thereto which has an image-evaluation programme, which substantially corresponds to that of the image-evaluation system, selected photographs of the camera system (5a, 5b) either directly being transmitted by means of the relay unit (11) to the analysis system (8, 9, 10), or alternatively or additionally the image data of selected photographs, already entered into the image-evaluation system (6a, 6b, 7a, 7b) and evaluated, being transmitted to said analysis system (8, 9, 10), so as to enable selected photographs to be analysed independently of the real-time evaluation by the image-evaluation system (6a, 6b, 7a, 7b).

2. Apparatus according to Claim 1, **characterized in that**, for executing the image-evaluation programmes, the analysis system (8, 9, 10) is provided with a first computer processor (9) and the image-evaluation system (6a, 6b, 7a, 7b) is provided with a second computer processor (6a, 6b).

3. Apparatus according to Claim 1 or 2, **characterized in that** the camera system (5a, 5b) comprises a plurality of cameras (5a, 5b) for taking photographs and one image-evaluation computer (6a, 6b) of the image-evaluation system (6a,6b, 7a, 7b) is respectively connected to one of the cameras (5a, 5b).

4. Apparatus according to one of Claims 1 to 3, **characterized in that** the analysis system (8, 9, 10) is configured in such a way that the image data of one of the photographs taken by the camera system (5a, 5b) can optionally be transmitted to the analysis system (8, 9, 10).

5. Apparatus according to one of Claims 1 to 4, **characterized by** the relay unit (11), connected to the image-evaluation system (6a, 6b, 7a, 7b), which transmits setting data to the image-evaluation system (6a, 6b, 7a, 7b) for setting said image-evaluation system (6a, 6b, 7a, 7b).

6. Method for the optical inspection of objects, such as bottles or the like, transported by conveying means and guided past a camera system, image data of photographs taken of the objects (2) to be examined being evaluated in real time in an image-evaluation system (6a, 6b, 7a, 7b) and objects recognized by the image-evaluation system as being defective being automatically separated out by means of a sorting device after they have passed through the camera system, **characterized in that** the image data of selected photographs are transmitted by way of a relay unit (11) either directly from the camera system (5a, 5b) to an analysis system (8, 9, 10), or alternatively or additionally the image data of selected photographs, already evaluated by the image-evaluation system (6a, 6b, 7a, 7b), are transmitted to said analysis system (8, 9, 10), so as to enable the image data to be analysed independently of the real-time evaluation by the image-evaluation system (6a, 6b, 7a, 7b).

7. Method according to Claim 6, **characterized in that** setting data for setting the image-evaluation system (6a, 6b, 7a, 7b) are transmitted to the image-evaluation system (6a, 6b, 7a, 7b) in such a way that the chronological sequence of real-time evaluation by the image-evaluation system (6a, 6b, 7a, 7b) is not delayed.

8. Method according to Claim 7, **characterized in that** the image data of one of the photographs, which has already previously been evaluated by the image-evaluation programme and recognized as showing a defect, is transmitted to the analysis system (8, 9, 10).

## Revendications

1. Dispositif (1) pour l'inspection optique d'objets (2) tels que des bouteilles ou similaires, comprenant:
- un système d'évaluation d'image,
- un système de caméras (5a, 5b) pour prendre des images des objets à contrôler (2) et pour établir et transmettre les données d'image correspondantes au système d'évaluation d'image (6a, 6b, 7a, 7b) utilisant un programme d'évaluation d'image pour évaluer en temps réel les données d'image transmises,
- un dispositif de transport (3) pour faire défiler les objets devant le système de caméras, ainsi qu'
- un système pour séparer les objets reconnus défectueux par le système d'évaluation d'image après passage à travers le système de caméras,
**caractérisé en ce qu'**
il comprend une unité de transmission (11) et, raccordé à celles-ci, un système d'analyse (8, 9, 10) utilisant un programme d'évaluation d'image correspondant essentiellement au système d'évaluation d'image, et auquel sont transmises par l'intermédiaire de l'unité de transmission (11) des images directement sélectionnées du système de caméras (5a, 5b) et, en plus ou en alternative, les données d'image des images sélectionnées, qui ont déjà été entrées dans le système d'évaluation d'image (6a, 6b, 7a, 7b) et évaluées, cela afin de pouvoir analyser les images sélectionnées, indépendamment de l'évaluation effectuée en temps réel par le système d'évaluation d'image (6a, 6b, 7a, 7b).

2. Dispositif selon la revendication 1,
**caractérisé en ce que**
pour exécuter le programme d'évaluation d'image, le système d'analyse (8, 9, 10) est équipé d'un premier processeur d'ordinateur (9) tandis que le système d'évaluation d'image (6a, 6b, 7a, 7b) est équipé d'un second processeur d'ordinateur (6a, 6b).

3. Dispositif selon la revendication 1 ou 2,
**caractérisé en ce que**
le système de caméras (5a, 5b) comprend plusieurs caméras (5a, 5b) de prise de vue, et chacun des calculateurs d'évaluation d'image (6a, 6b) du système d'évaluation d'image (6a, 6b, 7a, 7b) est relié à une caméra (5a, 5b).

4. Dispositif selon l'une des revendications 1 à 3,
**caractérisé en ce que**
le système d'analyse (8, 9, 10) est configuré de manière qu'au choix les données d'une des images prises par le système de caméras (Sa, 5b) peuvent être transmises au système d'analyse (8, 9, 10).

5. Dispositif selon l'une des revendications 1 à 4,
**caractérisé en ce que**
l'unité de transmission (11) reliée au système d'évaluation d'image (6a, 6b, 7a, 7b) transmet à ce système les données servant à effectuer son réglage.

6. Procédé pour l'inspection optique d'objets, tels que des bouteilles ou similaires, qu'un dispositif de transport fait défiler devant un système de caméras, des données des images prises des objets (2) à contrôler étant évaluées en temps réel dans un système d'évaluation d'image (6a, 6b, 7a, 7b) et les objets reconnus défectueux était automatiquement écartés par un dispositif d'éjection après passage à travers le système de caméras,
**caractérisé en ce qu'**
une unité de transmission (11) transmet à un système d'analyse (8, 9, 10) les données d'images sélectionnées soit directement d'une caméra (5a, 5b) soit en plus ou en variante les données d'images sélectionnées qui ont déjà été évaluées par le système d'évaluation (6a, 6b, 7a, 7b), pour permettre d'analyser les données d'image indépendamment de l'évaluation en temps réel par le système (6a, 6b, 7a, 7b).

7. Procédé selon la revendication 6,
**caractérisé en ce que**
des données de réglage du système d'évaluation d'image (6a, 6b, 7a, 7b) sont transmises à ce système de manière que l'évaluation en temps réel qu'il effectue ne soit pas ralentie.

8. Procédé selon la revendication 7,
**caractérisé en ce qu'**
au système d'analyse (8, 9, 10) sont transmises les données d'image d'une des images qui a déjà été évaluée par le programme d'évaluation d'image et reconnue comme une image de défaut.
